Europäisches Patentamt

(19) European Patent Office

Office européen des brevets

(11) Publication number: **0 046 041**
**A1**

## (12) EUROPEAN PATENT APPLICATION

(21) Application number: 81303523.5

(22) Date of filing: 31.07.81

(51) Int. Cl.³: **F 16 K 41/02**

(30) Priority: 08.08.80 GB 8025859
14.08.80 GB 8026474
21.10.80 GB 8033948
18.12.80 GB 8040529

(43) Date of publication of application:
17.02.82 Bulletin 82/7

(84) Designated Contracting States:
AT BE CH DE FR GB IT LI LU NL SE

(71) Applicant: Evans, Gerald John
Beechwood Cadbury Camp Lane
Clapton-in-Gordano, Portishead, Bristol(GB)

(72) Inventor: Evans, Gerald John
Beechwood Cadbury Camp Lane
Clapton-in-Gordano, Portishead, Bristol(GB)

(74) Representative: Carpmael, John William Maurice et al,
CARPMAELS & RANSFORD 43 Bloomsbury Square
London, WC1A 2RA(GB)

(54) Fluid control valve.

(57) In conventional valves where O ring seals are used as secondary seals e.g. as gland seals, the efficiency of the O ring seal declines rapidly when the valve is in constant use and the valve has to be stripped down and the O ring or other secondary seal changed.

The invention provides a moveable valve member with an adjustable secondary seal so that any slight wear and tear, which inevitably happens after a comparatively short period of time in use, can be taken up by the adjuster thereby eliminating the need to replace the secondary seal.

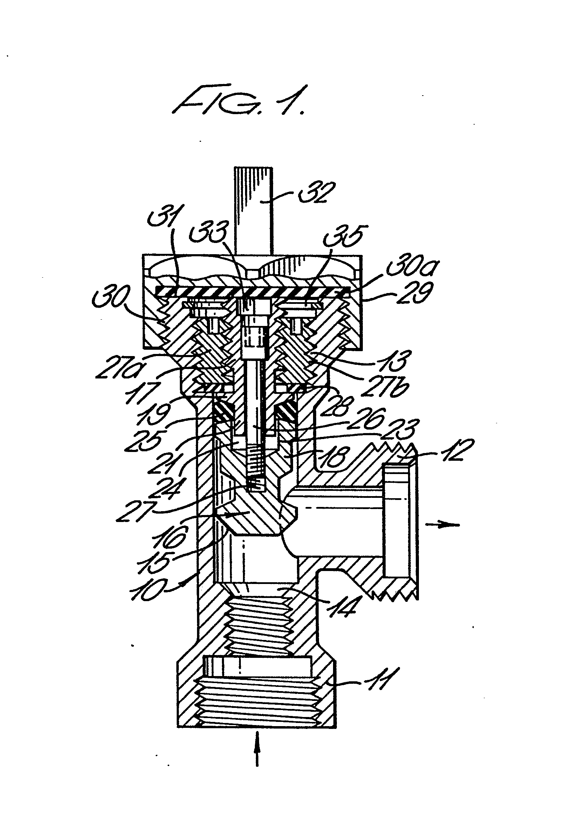

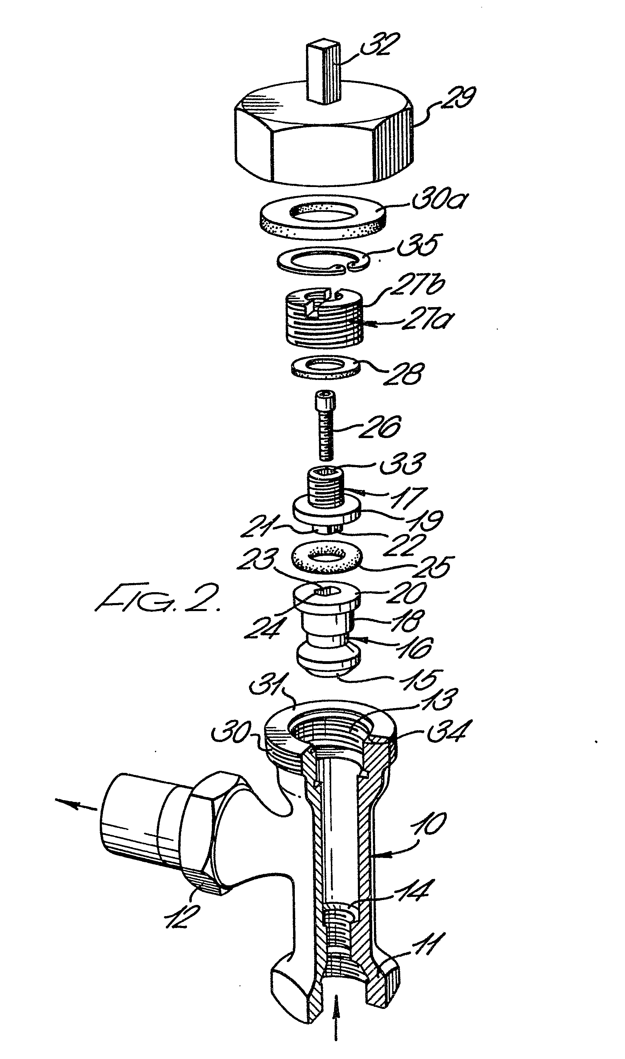

The valve (Figure 2) has a valve body 10 having a flanged inlet fitting 11 and flanged outlet fitting 12.

The valve body provides a main valve seat 14 adapted to be closed by a corresponding seating 15 on a valve plunger 16.

The valve spindle is divided into two portions, an upper spindle 17 and a lower spindle 18 which forms part of the valve plunger 16. On the upper spindle is a flange 19 corresponding to a similar flange 20 on the lower spindle 18. The upper spindle includes a downwardly projecting stub shaft 21 which has flats 22 on its sides adapted to mate with corresponding flat surfaces 23 formed in a bore 24 in the upper end of the lower spindle 18.

A secondary or O ring seal 25 which may alternatively be a washer, or ring washer, is arranged to be trapped between the flange 19 and the flange 20. To exert pressure on the O ring 25 a screw or bolt 26 is provided which passes through a bore in the upper spindle 17 and engages a threaded bore 27 (see Figure 1) in the lower spindle 18. By tightening up the screw or bolt 26, the O ring seal 25 will be compressed between flanges 19 and 20 and the tightness of the screw or bolt 26 will determine the pressure exerted on the O ring seal 25 and hence the sealing effect of the secondary seal.

./...

FIG.2.

This invention relates to a fluid control valve comprising a moveable valve member within a housing, the valve member being provided with a secondary seal usually in the form of a packing ring, O ring, or washer which may create a seal between the valve body wall and the moveable valve member.

The invention is applicable to many types of valves such as radiator valves, stop-cocks, hot and cold water taps, gas and liquid control valves and any other valves where fluids have to be controlled.

In conventional valves where O ring seals are used as secondary seals e.g. as gland seals, the efficiency of the O ring seal declines rapidly when the valve is in constant use and the valve has to be stripped down and the O ring or other secondary seal changed.

An object of the invention is to provide a moveable valve member with an adjustable secondary seal so that any slight wear and tear, which inevitably happens after a comparatively short period of time in use, can be taken up by the adjuster thereby eliminating the need to replace the secondary seal.

In accordance with the invention a moveable valve member, spindle or plunger is provided with a resilient sealing washer or O ring which is trapped between two relatively moveable parts of the valve member or plunger, means being provided to enable the pressure applied to the trapped O ring or washer to be varied whereby the effectiveness of the seal may be varied.

As the O ring wears, or other parts bed down or wear thus altering the effectiveness of the seal, the secondary seal may be improved by adjusting the pressure applied to the O ring or other sealing washer and thus improving the sealing qualities.

From another aspect the invention consists in a valve comprising a housing and a valve member, spindle or plunger axially moveable within the housing, the valve member, spindle or plunger having at one end means to open and close the valve, and a secondary seal disposed between the valve member, spindle or plunger and the wall of the housing, the secondary seal comprising a resilient washer or sealing ring or the like trapped between two parts of the valve member, spindle or plunger and adapted to make sealing contact with the wall of the valve, means being provided for adjusting the relative positions of the two parts of the valve member, spindle or plunger so as to vary the sealing pressure exerted by the secondary seal on the wall of the housing.

Preferably the two parts of the valve member, spindle or plunger each have an axial bore, and the means for adjusting the pressure applied to seal by the two parts of the spindle consists of a threaded member which extends through the bore in one part of the spindle into a threaded portion of the bore in the other part of the spindle whereby rotation of the threaded member will vary the pressure exerted on the seal.

With this kind of adjustment it is possible to adjust the secondary seal without removing the valve body or spindle and without interrupting the flow of fluid controlled by the main valve.

Preferably the threaded member is in the form of a bolt, a nut and bolt or a screw which may be adjusted by means of a tool inserted through the upper opening of the valve.

Preferably the lower end of the valve member effects the primary seal by means of a resilient washer attached to a washer plate of plastics material or metal or other suitable material which engages loosely over a projection or flange on the lower portion of the valve member or spindle.

Existing valves may be adapted in accordance with the invention by use of an adaptor or bush. The adaptor or bush includes a valve member, spindle or plunger corresponding in dimensions externally to the valve member it is to replace, the valve being modified in accordance with this invention so as to receive the adjustable secondary seal referred to above.

In the accompanying drawings:-

Figure 1 is a vertical section through a radiator valve illustrating diagrammatically the principles of the present invention;

Figure 2 is an exploded view of the components of a complete radiator valve assembly incorporating the invention;

Figure 3 is an elevation, partly in section of a stop-cock incorporating an adaptor designed to replace the working parts of an existing stop-cock, the adaptor incorporating the present invention;

Figure 4 is an exploded diagrammatic section of a spindle or a modified valve incorporating the present invention and particularly useful for steam valves;

Figure 5 is a diagrammatic sectional assembly of the valve spindle shown in Fig. 4;

Figure 6 is a diagrammatic section through another modified valve spindle embodying the present invention; and

Figure 7 is a section through a heavy duty stop-cock embodying the invention.

Referring first to Figure 2, there is shown a radiator valve which has a valve body 10 having a flanged inlet fitting 11, a flanged outlet fitting 12, and a threaded aperture 13 into which the working parts of the valve can be fitted.

The valve body provides a main valve seat 14 adapted to be closed by a corresponding seating 15 on a valve plunger 16.

The valve spindle is divided into two portions, an upper spindle 17 and a lower spindle 18 which forms part of the valve plunger 16. On the upper spindle is a flange 19 corresponding to a similar flange 20 on the lower spindle 18. The upper spindle includes a downwardly projecting stub shaft 21 which has flats 22 on its sides adapted to mate with corresponding flat surfaces 23 formed in a bore 24 in the upper end of the lower spindle 18.

A secondary or O ring seal 25 which may alternatively be a washer, or ring washer, is arranged to be trapped between the flange 19 and the flange 20. To exert pressure on the O ring 25 a screw or bolt 26 is provided which passes through a bore in the upper spindle 17 and engages a threaded bore 27 (see Figure 1) in the lower spindle 18. By tightening up the screw or bolt 26, the O ring seal 25 will be compressed between flanges 19 and 20 and the tightness of the screw or bolt 26 will determine the pressure exerted on the O ring seal 25 and hence the sealing effect of the secondary seal.

The upper spindle 17 is supported by a collar 27a into which it can be screwed, there being a collar sealing washer 28 between the collar 27a and the top flat face of the flange 19 of upper spindle 17.

The collar 27a has an external thread 27b which may engage in the corresponding thread 13 in the aperture of upper end of the valve body 10, the collar 27a being held in position, as shown in Figure 1, by a circlip 35.

Finally the upper end of the valve body may be sealed by means of a cap 29 which engages an external thread 30 on the valve body, a cap sealing washer 30a being interposed between the cap 29 and the upper face portion 31 of the valve body.

The complete assembly can be seen in Figure 1 and it would be noted that the cap 29 includes a key 32 so that when the cap is removed the key 32 can be engaged in a corresponding square aperture 33 in the upper spindle 17 so as to turn the spindle and thereby apply the main valve by causing plunger 16 to seat on the valve seat 14.

The assembly of the valve will be described particularly with reference to Figures 1 and 2. The O ring seal 25 is placed on top of the flange 20 of lower spindle 18 and then the upper spindle 17 is pushed on top of the O ring so that the stub shaft 21 enters the aperture 24 in the top of the lower spindle being guided by the flats 22, 23 on the sides of the stub shaft 21 and of the aperture 24 respectively. This will ensure that the plunger 16 and lower spindle 18 will only move up and down in unison during normal operation and not revolve relatively to the upper spindle 17. The screw 26 is then inserted to hold the upper spindle 17, O ring seal 25 and lower spindle 18 together and rotated until the spindle parts are held closely together with the O ring seal 25 trapped between them. The collar sealing washer 28 is then placed over the flange 19 and the collar 27a is threaded onto the threaded upper end of the upper spindle 17 until tightness is achieved, using the tool 32 on cap 29.

All the parts are now assembled ready to insert into the valve body and this is done by screwing the collar 27a complete with all the other parts into the valve body 10. To ensure that they cannot be unscrewed under normal operating conditions, the circlip 35 is inserted into a circlip groove 34 in the valve body 10 to hold the parts firmly into position. To operate the valve under normal conditions a key is inserted into the top of the spindle and the valve is turned up or down exactly as with a conventional valve. To shut the valve off the spindle and therefore the plunger are rotated until the valve seating 14 is sealed by the plunger 16 and its seating 15.

With conventional valves wear takes place on the O rings such as O ring 25 and this has to be replaced. With the valve according to this invention wear can be taken up by inserting a key into the screw 26 so as to rotate the screw 26 which causes the upper spindle 17 and lower spindle 18 to be brought close together thus squeezing the O ring 25 and ensuring that the O ring seals more tightly against the wall of the valve body 10 (Fig. 1). By turning the screw 26 in the reverse direction the seal may be slackened if required.

The O ring 25 can be a conventional compressible O ring or washer of rubber, plastic, leather or any other appropriate material.

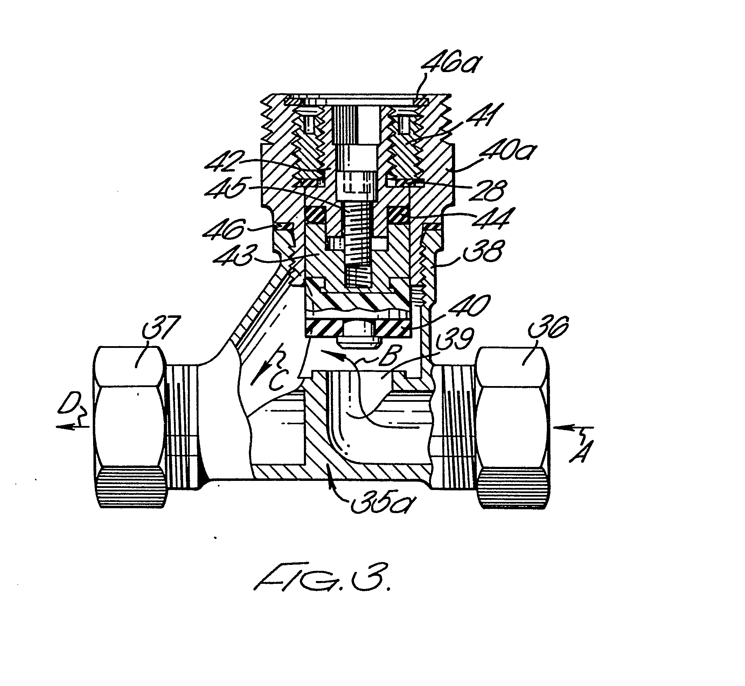

In Figure 3 is shown a valve which has been adapted to incorporate the present invention by using an adaptor bush which carries the two-part spindle of the present invention.

In Figure 3 is shown a valve body 35a with a flanged fluid inlet 36 and fluid outlet 37, the fluid path being indicated by the arrows A, B, C and D. The main valve aperture 39 can be closed by means of a primary valve washer 40.

At the upper end of the valve body 35a is a threaded extension 38 to which the adaptor of this invention may be attached. The adaptor comprises an adaptor bush 40a which carries the remaining moving parts of the valve.

Within the adaptor bush 40a is a retaining bush 41 into which may be screwed the valve assembly comprising an upper spindle 42, lower spindle or plunger 43 with an O ring seal or washer 44 trapped between them, and screw 45 by which adjustment of the O ring seal may be made so as to bring the upper spindle 42 and lower spindle or plunger 43 closer together (or further apart) so as to vary the pressure on the O ring seal and thus the sealing effect of the O ring on the adaptor inner wall.

An additional seal 46 is located between the valve body extension 38 and the adaptor bush 40a.

As before the parts may be held in place by a circlip 46a and the assembly may be completed by means of a cap and washer as described with reference to Figures 1 and 2.

The adaptor bush and all the working parts may be assembled ready to be installed into the valve body and then the adaptor bush may be threaded into the upper extension of the valve body so as to convert an existing valve body to incorporate the present invention.

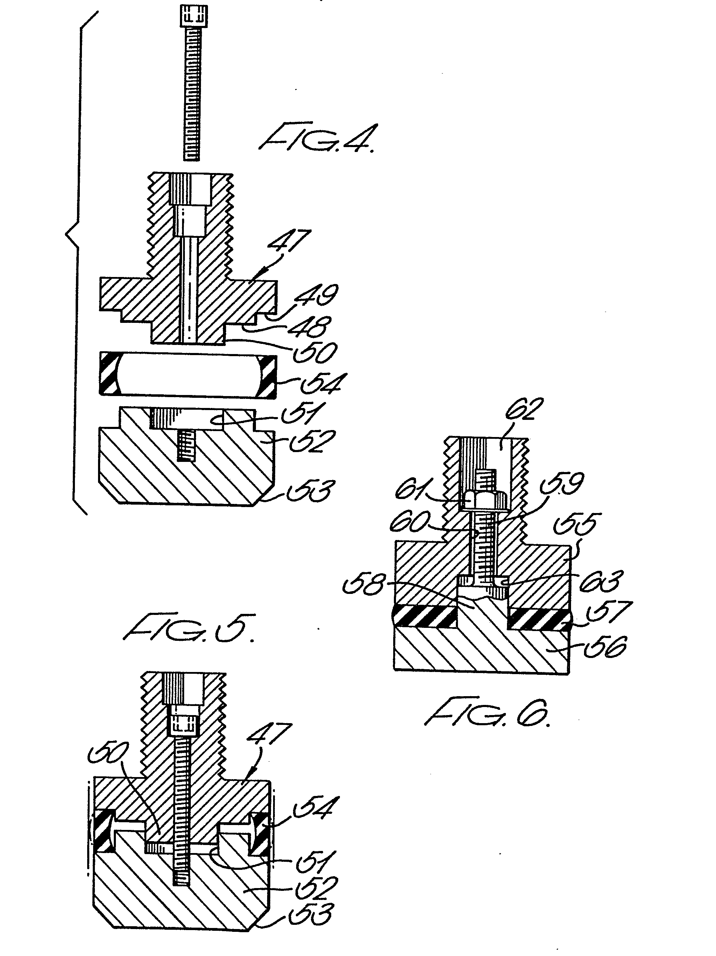

Figure 4 shows an exploded view of an alternative form of the invention in which the shape of the O ring has been varied to suit a particular design of valve.

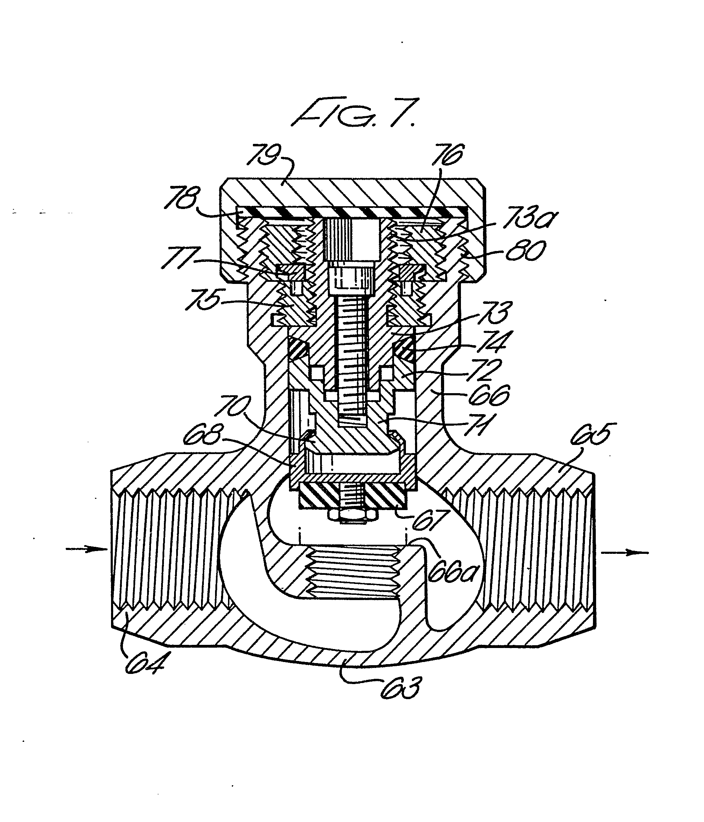

It will be noted that the upper spindle 47 has a stepped end forming two separate steps 48 and 49. This leaves a central stem 50 which engages in a recess 51 in the lower spindle portion 52 which also acts as the valve plunger and has a valve sealing surface 53. The sealing ring 54 is of the shape shown in Figure 4. When the parts are assembled, as shown in Figure 5, the stem 50 enters the recess 51 and this still leaves space for further adjustment of the pressure on the ends of the sealing ring 54 so that the sealing ring 54 may be caused to bow as shown in Figure 5.

In the arrangement shown in Figure 6 the spindle is again in two parts an upper spindle 55 and a lower spindle 56 between which is trapped a sealing washer or O ring 57. The lower portion 56 carries a stem 58 which in turn supports a threaded bolt 59 which extends through an aperture 60 in the upper spindle 55. The adjustment is carried out by means of a nut 61 which can be turned by means of a suitable box spanner extending through a passage 62 in the upper spindle 55.

As the nut 61 is tightened on the bolt 59 the stem 58 enters an aperture 63 in the lower part of the upper spindle portion 55, and both the aperture 63 and the stem 58 have flats on them to ensure that no rotation can occur.

Thus the nut and bolt action described with reference to the previous embodiment is here reversed so that the lower portion of the spindle acts as the male section of the bolt and the nut, which is situated in the recess of the upper spindle, acts as the tension control. By tightening or slackening the nut the upper and lower spindle portions are moved relatively to each other thus varying the compression on the rubber or other seal.

The arrangement shown in Figures 4, 5 and 6 is particularly suitable for large valves such as steam valves chemical control valves, water valves and similar valves and the O ring would be of hard rubber or of a compounded sealing material or plastic such as PTFE. Alternatively if chemicals were involved as the fluid being controlled, a fluorocarbon or similar seal might be used.

In Figure 7 a stop-cock is shown which has a body 63, a threaded fluid inlet 64 and outlet 65 and a lateral extension 66 of the body 63 which receives the working parts of the valve. The valve has a seat 66a adapted to be closed by means of a valve washer 67 which is supported on a jumper 68. The jumper 68 is of novel design. It is made of plastics metal or other suitable material and instead of being mounted on a central spindle it is in the form of a loose snap fit or it may be swaged or folded over a flange 70 on the lower end of the valve plunger 71. The valve plunger 71 is integral with the lower portion 72 of the valve spindle, the upper portion 73 being of the form described with reference to Figure 4, and an O ring seal 74 being trapped between the upper and lower portions of the valve spindle. The upper portion 73 of the spindle has an external thread 73a by which it can be threaded into a collar 75 in turn threaded into the upper portion 66 of the valve body.

The assembly may be locked in position by means of a locking bush 76 which engages in flanged washer 77 in turn engaging the collar 75. The assembly is completed by means of a cap 79 and final washer 78.

The cap may be of the type shown in the previous drawings in which case the cap has three functions. It acts as the third seal, it protects the threads, and it can act as an on-off key for the valve.

The external thread 80 onto which the cap is screwed may also be used to attach a fitting, as of the kind described in my UK Patent Application No. 8036761, to enable the internal working parts, and in some cases the entire valve, to be removed and replaced under pressure.

The jumper or washer plate 68 is designed so that it has a degree of free movement, i.e. it floats thus enabling the valve washer 67 to find its own position on the seat 66a.

The spindle could alternatively be split into a series of separate parts or rings or plates with ring seals sandwiched between the plates so as to provide a series of seals rather than a single seal. A number of rings could be used and the same principle of applying compression to the separate plates endwise could be used to vary the amount of sealing. Thus the sealing could be kept constant and uniform throughout a series of seals.

The O ring seals of this invention prevent fluid getting to the upper working section of the valve and thus ensure the threads in this area remain corrosion free.

Also the cap can be packed with grease so that the grease enters the chamber at the top of the spindle to keep the bore of the valve and upper working parts of the valve lubricated.

The primary valve consisting of the jumper 68 and washer 67 may take different forms. For instance the jumper 68 may act as the support for a gate valve plate or ball valve or plug valve or any similar type of fluid valve opening and closing apparatus.

Claims:

1.     A moveable valve member, spindle or plunger provided with a resilient sealing washer or O ring characterised by this, that the sealing washer or O ring (25) is trapped between two relatively moveable parts (17,18) of the valve member or plunger, means (26) being provided to enable the pressure applied to the trapped O ring or washer to be varied whereby the effectiveness of the seal (25) may be varied.

2.     A valve comprising a housing and a valve member, a spindle or plunger axially moveable within the housing, the valve member spindle or plunger having at one end means to open and close the valve, and a secondary seal disposed between the valve member, spindle or plunger and the wall of the housing, the secondary seal comprising a resilient washer or sealing ring or the like characterised by this, that the washer or sealing ring (25) is trapped between two parts (17,18) of the valve member, spindle or plunger and adapted to make sealing contact with the wall of the valve (10), means (26) being provided for adjusting the relative positions of the two parts (17,18) of the valve member, spindle or plunger so as to vary the sealing pressure exerted by the secondary seal (25) on the wall of the housing.

3.     A valve member, spindle or plunger according to claim 1, or a valve according to claim 2, characterised by this, that each of the two parts (17,18) has an axial bore (33,24), and the means for adjusting the pressure applied to seal by the two parts of the spindle consists of a threaded member (26) which extends through the bore (33) in one part (17) of the spindle into a threaded portion of the bore (24) in the other part (18) of the spindle whereby rotation of the threaded member (26) will vary the pressure exerted on the seal.

4.     A valve member, spindle or plunger, or a valve, according to claim 3 characterised by this, that the threaded member (26) is in the form of a bolt, a nut and bolt or a screw which may be adjusted by means of a tool (32) inserted through the upper opening of the valve.

5. A valve member or valve according to any preceding claim characterised by this, that the lower end of the valve member effects the primary seal by means of a resilient washer (67) attached to a washer plate (68) which engages loosely over a projection or flange (70) on the lower portion (71) of the valve member or spindle.

6. An adaptor or bush including a valve member, spindle or plunger corresponding in dimensions externally to the valve member it is to replace, characterised by this, that the valve member spindle or plunger is in accordance with any preceding claim.

7. A valve member, spindle or plunger or a valve according to any preceding claim and characterised by this, that the valve member, spindle or plunger is divided into three or more parts with an O ring or washer between each pair of adjacent parts so arranged that the pressure exerted on all of the O rings or washers may be varied.

0046041

1/5

FIG. 1.

FIG. 2.

FIG.3.

0046041

4/5

FIG.4.

47
49
48
50
54
51
52
53

FIG.5.

62
61
60
59
55
58
63
57
56

FIG.6.

50
47
54
51
52
53

FIG. 7.

0046041

European Patent
Office

EUROPEAN SEARCH REPORT

Application number

EP 81 30 3523

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| | FR - A - 1 502 992 (IMP. CHEMICAL IND. LTD.)<br>* Page 3, lines 45-58 *<br>--<br>GB - A - 1 176 623 (TRIPOLI)<br>* Page 2, lines 2-126 *<br>---- | 1-4,6<br><br>1-4,6 | F 16 K 41/02<br><br>TECHNICAL FIELDS SEARCHED (Int. Cl.³)<br><br>F 16 K |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 11-11-1981 | VERELST |

EPO Form 1503.1   06.78